# FASCICULE DE BREVET EUROPEEN

(11) **EP 3 230 705 B1**
(45) Date de publication et mention de la délivrance du brevet: **30.01.2019**
(21) Numéro de dépôt: 15817960.6
(22) Date de dépôt: 02.12.2015
(51) Int. Cl.: G01K 15/00, G01K 11/06

(54) **DISPOSITIF DE MESURE LOCALE DE TEMPÉRATURE, CELLULE ET PROCÉDÉ D'UTILISATION ASSOCIÉS**
VORRICHTUNG ZUR LOKALEN TEMPERATURMESSUNG, ZUGEHÖRIGE ZELLE UND VERFAHREN ZUR VERWENDUNG
DEVICE FOR LOCAL TEMPERATURE MEASUREMENT, ASSOCIATED CELL AND METHOD FOR USE

(30) Priorité: 08.12.2014 FR 1462067
(43) Date de publication de la demande: 18.10.2017
(73) Titulaire: Electricité de France, 75008 Paris (FR); Laboratoire National de Metrologie et d'Essais, 75724 Paris Cedex 15 (FR)
(72) Inventeur: BECK, Yves-Laurent, 38700 La Tronche (FR); SOLLET, Patrick, 28300 Mainvilliers (FR)
(74) Mandataire: Cabinet Plasseraud
(86) Numéro de dépôt international: PCT/FR2015/053295
(87) Numéro de publication internationale: WO 2016/092181

(56) Documents cités:
- US-A- 3 499 310
- US-A- 4 627 740
- US-A1- 2008 013 591

## Description

L'invention concerne un dispositif de mesure locale de température. US 4 627 740 traite d'un tel sujet.
Les dispositifs de ce type sont notamment prévus pour réaliser des mesures de température d'une zone d'étendue limitée correspondant à leur voisinage immédiat. Certains de ceux-ci sont notamment prévus pour réaliser des mesures de température d'un objet en étant mis au contact de celui-ci. On parle alors de mesure de température par contact.
De manière connue, les dispositifs de mesure de température sont sujets à des dérives au cours du temps. Ces dérives aboutissent à des mesures de température qui présentent un écart important à la température effective qu'ils sont supposés mesurer. Ce phénomène de dérive doit alors être régulièrement évalué, par exemple en vue de corriger les mesures de température effectuées.
Ces opérations sont alors généralement mises en oeuvre en accédant physiquement au dispositif de mesure et en effectuant les opérations nécessaires in-situ.
Toutefois, cette manière de procéder présente des inconvénients.
En effet, dans certains contextes d'utilisation, l'accès au dispositif de mesure peut être difficile, voire impossible. C'est notamment le cas pour des sondes dites inaccessibles, qui ont vocation à être noyées dans une structure dont elles doivent mesurer la température et à y demeurer toute leur vie.
Aussi, l'invention vient améliorer la situation.
A cet effet, l'invention concerne un dispositif de mesure locale de température adapté pour réaliser des mesures de température d'un voisinage immédiat dudit dispositif selon la revendication 1.

Ainsi, il est possible d'effectuer un suivi des dérives de la sonde de mesure locale de température sans avoir besoin d'accéder au dispositif. Ceci facilite donc la prise en compte des dérives de la sonde de température au fil du temps.
Selon un aspect de l'invention, le dispositif de mesure comprend une gaine de protection encapsulant l'embase, de sorte que le dispositif de mesure locale de température est adapté pour être reçu de manière durable dans une structure de réception et être inaccessible au sein de ladite structure de réception.
Ceci est particulièrement avantageux dans la mesure où l'on peut ainsi effectuer un suivi des dérives de sondes auxquelles il n'est pas possible d'accéder en cours de vie.
Selon un autre aspect de l'invention, la cellule connecte thermiquement la sonde de mesure locale de température audit voisinage immédiat de sorte que la cellule autorise la réalisation de mesures de température représentatives de la température dudit voisinage immédiat par la sonde de mesure locale de température reçue dans l'embase.
Selon un autre aspect de l'invention, le dispositif de mesure locale de température est adapté pour permettre de réaliser la vérification métrologique de la sonde de mesure locale de température à partir d'une température mesurée par la sonde de mesure locale de température lors du changement d'état du premier matériau et de la température de changement d'état fixe prédéterminée.
Ceci permet de réaliser le suivi des dérives de la sonde de température de manière simple.
Dans une réalisation, le dispositif comprend au moins un premier et un deuxième matériaux agencés dans l'embase et présentant au moins une première, respectivement une deuxième température de changement d'état fixes prédéterminées, le dispositif de transfert d'énergie thermique étant adapté pour entraîner un changement d'état des premier et deuxième matériaux, le dispositif de mesure locale de température étant adapté pour permettre de réaliser une correction de mesures de température fournies par la sonde de mesure locale de température à partir de températures mesurées par la sonde de mesure locale de température lors des changements d'état respectifs des premier et deuxième matériaux et des première et deuxième températures de changement d'état fixes prédéterminées.
Ainsi, non seulement il est possible d'évaluer les dérives de la sonde de température, mais il est également possible de corriger les mesures qu'elle fournit, et ce de manière simple.
Selon un autre aspect de l'invention, le dispositif comprend un module de chauffage comportant un fil résistif enroulé autour de la cellule.
Ceci permet de réaliser le chauffage de la cellule de manière simple et fiable.
Selon un autre aspect de l'invention, le fil résistif définit un enroulement présentant un pas variable le long d'un axe de la cellule.
Ceci permet de chauffer les différentes portions de la cellule de manière différente, ce qui contribue à compenser l'hétérogénéité de la distribution de température au sein de la cellule.
Selon un autre aspect de l'invention, l'enroulement présente un pas valant une première valeur sur une portion centrale de la cellule et une deuxième valeur inférieure à la première valeur sur des portions d'extrémité de la cellule.
Ceci permet d'améliorer l'homogénéité de la température au sein de la cellule en compensant les déperditions de chaleur se produisant par les extrémités de la cellule.
Selon un autre aspect de l'invention, le dispositif de transfert d'énergie thermique comprend un module de refroidissement et un échangeur thermique configuré pour évacuer de la chaleur générée par le module de refroidissement lors du fonctionnement du module de refroidissement.
Ceci permet de limiter l'impact de la chaleur ainsi générée sur la cellule.

Selon l'invention, le dispositif comprend en outre des moyens d'isolation thermique configurés pour homogénéiser la température au sein de la cellule et limiter les pertes thermiques par les extrémités de la cellule.

Selon l'invention, les moyens d'isolation thermique comprennent au moins un bloc d'isolation en appui contre l'une de faces d'extrémité de l'embase.

Selon un autre aspect de l'invention, les moyens d'isolation comprennent une chemise d'isolation entourant une portion centrale de l'embase.
L'invention concerne également une cellule pour dispositif de mesure locale de température tel que défini dans la revendication 11.

Selon un aspect de l'invention, la cellule comprend une gaine de protection encapsulant l'embase, de sorte que le dispositif de mesure locale de température est adapté pour être reçu de manière durable dans une structure de réception et être inaccessible au sein de ladite structure de réception.
L'invention concerne également un procédé d'utilisation d'un dispositif de mesure locale de température tel que défini dans la revendication 13.

Selon un autre aspect de l'invention, dans le procédé d'utilisation :
∘ on entraîne en outre un changement d'état du deuxième matériau avec le dispositif de transfert d'énergie thermique,
∘ avec la sonde de mesure locale de température, on réalise en outre des mesures de température lors du changement d'état du deuxième matériau,
∘ on détermine une température de changement d'état mesurée pour le deuxième matériau à partir des températures mesurées pendant le changement d'état du deuxième matériau,
∘ on réalise une correction d'une mesure réalisée par la sonde de mesure locale de température à partir des températures de changement d'état fixes prédéterminées des premier et deuxième matériaux et des températures de changement d'état mesurées pour les premier et deuxième matériaux.

Selon un autre aspect de l'invention, lors du procédé tel que défini ci-dessus, pour la détermination d'une température de changement d'état mesurée, on détermine la dérivée des températures mesurées par la sonde de mesure locale de température lors du changement d'état, on détermine des instants de début et de fin du changement d'état à partir de la dérivée des températures mesurées, et on détermine la température de changement d'état mesurée en tant que moyenne des températures mesurées par la sonde de mesure locale de température entre les instants de début et de fin du changement d'état.

L'invention sera mieux comprise à la lecture de la description détaillée qui va suivre, donnée uniquement à titre d'exemple, et faite en référence aux Figures annexées, sur lesquelles :
- la Figure 1 illustre un dispositif de mesure locale de température selon l'invention ;
- la Figure 2 illustre une vue en perspective d'une embase du dispositif de la Figure 1 ;
- la Figure 3 illustre un procédé d'utilisation du dispositif de mesure locale de température selon l'invention ;
- la Figure 4 illustre une rampe de chauffage et une courbe de mesure de température réalisée par le dispositif de mesure locale de température de la Figure 1 ; et
- la Figure 5 illustre une variante du dispositif de mesure de température selon l'invention.

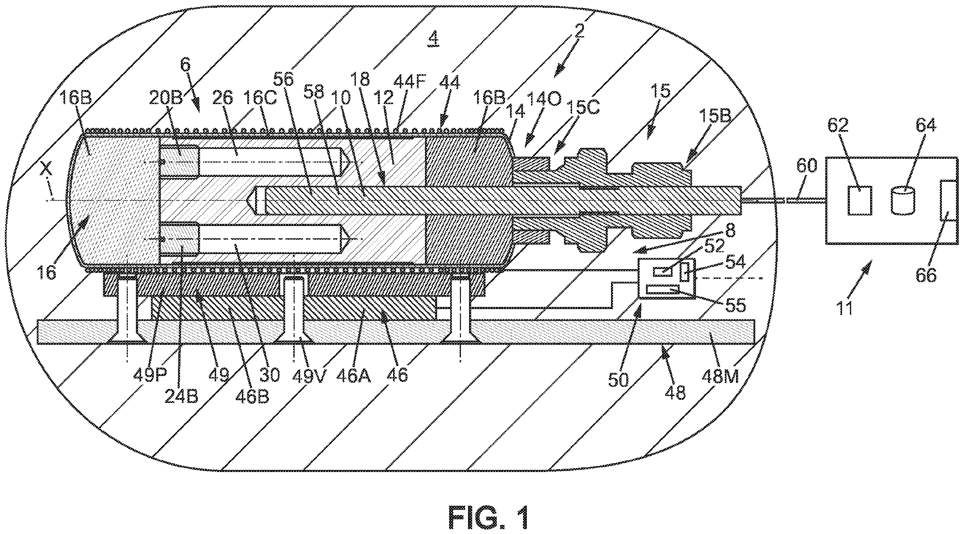

La Figure 1 illustre un dispositif de mesure locale de température 2 selon l'invention, ci-après dispositif 2.

Par « mesure locale », on entend que le dispositif 2 est configuré pour réaliser des mesures de température d'une zone d'étendue limitée autour du dispositif 2 et correspondant à l'environnement immédiat du dispositif 2. En particulier, à la notion de mesure locale, on oppose la notion de mesure répartie, qui correspond à une mesure effectuée sur une zone étendue, par exemple en une pluralité de points dispersés spatialement. Ce type de mesures est notamment fourni par les fibres optiques de mesure de température.

Préférentiellement, le dispositif 2 est un dispositif de mesure de température par contact. En d'autres termes, le dispositif 2 mesure la température d'un objet au contact duquel il se trouve. En particulier, le dispositif 2 est prévu pour être noyé dans une structure de réception 4 au contact de laquelle il se trouve et demeurer dans cette structure 4 de manière durable. Dans certaines modes de réalisation, le dispositif 2 est prévu pour être inaccessible tout au long de sa vie une fois mis en place dans la structure de réception 4. Toutefois, en variante, le dispositif 2 est prévu pour être récupéré en cours de vie, par exemple en vue de sa maintenance.

La structure de réception 4 est un matériau d'un équipement compris dans le groupe formé par: un ouvrage du génie civil, un équipement quelconque de centrale de production d'énergie électrique, une machine, un équipement de réseau de tuyauterie, un forage, un équipement radioactif, un ouvrage comprenant des géomatériaux.

Le matériau en question est par exemple compris dans le groupe formé par : un sol, du béton, de l'air, un polymère, un métal.

En référence à la Figure 1, le dispositif 2 comprend une cellule à point fixe 6, ci-après cellule 6, un dispositif de transfert d'énergie thermique 8, une sonde de mesure locale de température 10 reçue dans la cellule 6 et un module d'acquisition 11.

La cellule 6 est adaptée pour générer un changement d'état d'au moins un matériau, dit point fixe, qu'elle comprend.

En outre, la cellule 6 est conçue pour autoriser la réalisation de mesures de température de la structure 4 par la sonde locale de température 10 à travers la cellule 6, ces mesures étant représentatives de la température effective de la structure 4 au voisinage du dispositif 2. A cet effet, la cellule 6 connecte thermiquement la sonde 10 à la structure 4.

La cellule 6 présente des dimensions en longueur ayant le même ordre de grandeur que la longueur d'une portion sensible de la sonde 10, cette portion étant reçue dans la cellule 6. Par exemple, le rapport entre la longueur de la cellule 6 et la longueur de la portion sensible de la sonde 10 est compris entre 1 et 10. En outre, le rapport entre la hauteur de la cellule 6 et la hauteur de la portion sensible de la sonde 10 est inférieur ou égal à 10.

Par exemple, la cellule 6 présente une longueur inférieure ou égale à 10 cm, et présente une hauteur inférieure ou égale à 6 cm.

Ces considérations de dimensions ont pour effet d'améliorer le couplage thermique entre la sonde 10 et la structure 4, et ainsi favoriser la réalisation par la sonde 10 de mesures de la température de la structure 4 à travers la cellule 6. En effet, ces dimensions font que la cellule ne représente qu'une petite quantité de matière interférant peu avec le champ de température de la structure 4.

Par ailleurs, ceci a pour effet d'améliorer la réponse thermique de la cellule 6 aux variations de température de la structure 4, ce qui réduit l'intervalle de temps nécessaire pour que la sonde 10 puisse mesurer une variation de température se produisant au sein de la structure 4.

Par exemple, cette réponse thermique du dispositif 2, qui correspond à la vitesse à laquelle la sonde 10 parvient à mesurer la température de la structure 4 lorsque celle-ci change, est inférieure à environ une minute.

Par ailleurs, ces considérations de dimensions simplifient l'intégration du dispositif 2 à la structure 4.

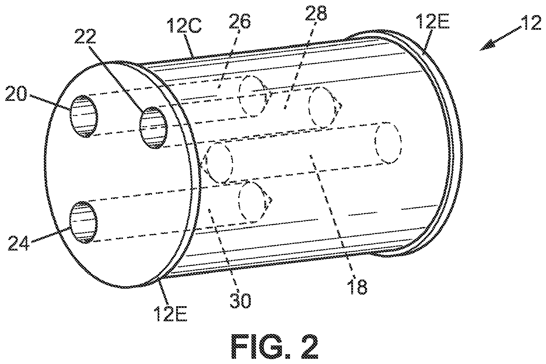

En référence aux Figures 1 et 2, la cellule à point fixe 6, ci-après cellule 6, comprend une embase 12 conductrice thermiquement, une gaine de protection 14, et des moyens 16 d'isolation thermique.

L'embase 12 est adaptée pour connecter thermiquement la sonde 10 à la structure 4 de sorte que la sonde 10 puisse mesurer la température de la structure 4. L'embase 12 est réalisée en un matériau qui est un bon conducteur thermique. Par exemple, l'embase 12 est réalisée en graphite. Par exemple, le graphite utilisé est une nuance de graphite IG510 commercialisée par la société Toyo Tanso. Ce matériau est particulièrement intéressant en raison de sa faible porosité. Ceci a pour effet de limiter voire supprimer une éventuelle pollution de matériaux à changement d'état qu'elle contient par l'embase 12 ou par d'autres matériaux et ainsi empêcher toute dérive de la température de ces changements d'état fixe au fil du temps. Ceci est décrit plus en détail ci-dessous. Alternativement, l'embase 12 est réalisée en aluminium, en cuivre ou tout autre matériau ayant une bonne conductivité thermique et ne polluant pas les matériaux à changement d'état.

L'embase 12 présente une forme générale cylindrique d'axe X. L'embase 12 présente une section sensiblement circulaire. Dans l'exemple des Figures 1 et 2, cette section est de forme générale circulaire. Alternativement, l'embase 12 présente une section rectangulaire.

L'embase 12 présente une portion centrale 12C et deux portions d'extrémité 12E. Ces différentes portions sont coaxiales d'axe X. La portion centrale 12C présente un diamètre légèrement inférieur à celui des portions d'extrémité 12E, qui sont de même diamètre.

Toujours en référence aux Figures 1 et 2, l'embase 12 comprend un orifice 18 de réception de la sonde 10. L'orifice 18 présente une forme générale cylindrique d'axe parallèle à l'axe X. L'orifice 18 est par exemple agencé au centre de l'embase 12, son axe correspondant alors sensiblement à l'axe X. Les dimensions et la forme de l'orifice 18 sont complémentaires des dimensions et de la forme d'une portion sensible de la sonde 10, décrite plus en détail ci-après. L'orifice 18 est borgne, c'est-à-dire qu'il ne traverse pas l'intégralité de l'embase. Alternativement, l'orifice 18 est traversant. Il est alors couplé à un bouchon prévu pour obturer l'extrémité de l'orifice 18 opposée à l'extrémité de l'orifice dans laquelle la sonde 10 est engagée.

L'embase 12 comprend également trois logements 20, 22, 24. Ces logements sont sensiblement cylindriques et parallèles à l'axe X. Chaque logement 20, 22, 24 reçoit respectivement un premier, un deuxième et un troisième matériau 26, 28, 30. Les matériaux 26, 28, 30 sont connectés thermiquement à la sonde 10 et au dispositif de transfert thermique 8 par l'embase 12.

Ces matériaux 26, 28, 30 sont différents les uns des autres. Chacun de ces matériaux forme un point fixe du dispositif 2, c'est-à-dire un matériau dont la température de changement d'état qui est connue et fixe est utilisée comme température de référence. Ces matériaux 26, 28, 30 présentent chacun une température de changement d'état T1, T2, T3 prédéterminée située dans la gamme des températures que le dispositif 2 a vocation à mesurer.

En pratique, le contexte d'utilisation du dispositif 2 conditionne le choix des trois matériaux 26, 28, 30. Par exemple, pour une plage de fonctionnement du dispositif 2 correspondant sensiblement à la plage [-10 °C ; 100 °C], on choisit les trois matériaux suivants : le premier matériau 26 est de l'eau (dont la température de fusion est sensiblement égale à 0 °C), le deuxième matériau 28 est un alliage binaire de Gallium-Bismuth ayant une température de fusion sensiblement égale à 29,5 °C, et le troisième matériau 30 est un alliage binaire de Bismuth-Indium ayant une température de fusion sensiblement égale à 72,7 °C.

Plus précisément, l'alliage Gallium-Bismuth comprend sensiblement 99,78% de Gallium et 0,22% de Bismuth en masse. En outre, l'alliage Bismuth-Indium comprend sensiblement 33,3% de Bismuth et 66,7% d'Indium en masse.

Par exemple, le logement 22 pour le deuxième matériau 28 comprend environ 1,8 g d'alliage Gallium-Bismuth. En outre, le logement 24 comprend environ 2 g d'alliage Bismuth-Indium.

A noter que la valeur de ces masses est en pratique conditionnée par les dimensions de la sonde 10.

En outre, le dispositif 2 selon l'invention est particulièrement avantageux dans la plage de température [-20 °C, 250 °C].

Comme on le verra par la suite, lors du fonctionnement du dispositif 2, on induit un changement d'état d'un ou plusieurs de ces trois points fixes 26, 28, 30 dont la température de fusion (ou de solidification) est connue de façon à mesurer une dérive de la sonde 10 et/ou en corriger les mesures.

A noter en outre que l'évolution temporelle des propriétés des matériaux 26, 28, 30, en particulier de leur température de changement d'état, est analysée préalablement et est donc connue.

Préférentiellement, les matériaux 26, 28, 30 sont des matériaux présentant un domaine de surfusion faible. De manière connue, la surfusion est un phénomène transitoire par lequel un matériau peut ne pas changer d'état alors même que sa température atteint sa température de changement d'état. Par exemple, du fait de ce phénomène, l'eau peut se trouver dans un état liquide à une température inférieure à 0 °C. Cet état de surfusion cesse par exemple sous l'effet d'une perturbation, ou lorsque la température dépasse la température de changement d'état associé d'une certaine valeur, le matériau reprenant alors brusquement cette température de changement d'état, celui-ci se déroulant par la suite de façon classique.

Ceci a pour effet de faire sensiblement coïncider les températures de solidification et de liquéfaction de chacun des matériaux. Par exemple, en pratique, l'utilisation de Bismuth dans l'alliage Gallium-Bismuth a pour effet de faire diminuer le phénomène de surfusion du Gallium.

Préférentiellement, la distance séparant deux logements entre eux et la distance séparant un logement de l'orifice 18 sont supérieures ou égales à 2 mm. Ceci limite les risques d'une éventuelle pollution des matériaux entre eux au travers de l'embase et assure ainsi la stabilité dans le temps des températures de changements d'état des matériaux.

A noter qu'à chaque logement 20, 22, 24 est associé un bouchon 20B, 22B, 24B obturant l'ouverture du logement correspondant (seuls les bouchons 20B et 24B sont illustrés sur la Figure 1).

Les moyens d'isolation 16 sont adaptés pour, lors des transferts thermiques avec le dispositif 8, limiter les pertes thermiques par les extrémités de la cellule 6, réduire le couplage thermique entre l'embase 12 de la gaine de protection 14, et pour homogénéiser la température au sein de la cellule 6. En outre, les moyens d'isolation 16 sont adaptés pour autoriser le couplage thermique entre l'embase 12 (et donc la sonde 10) et la structure 4, en particulier lorsque le dispositif 8 est inactif.

Les moyens d'isolation 16 comprennent deux blocs 16B d'isolation. Les blocs 16B présentent chacun une forme générale cylindrique de même diamètre que les portions d'extrémité 12E de l'embase 12 et sont chacun agencés en appui contre l'une de ces portions 12E de manière coaxiale. En d'autres termes, chaque bloc 16B prolonge l'embase 12 à l'une des extrémités de cette dernière. A noter que le bloc 16B agencé au contact de la face de l'embase 12 présentant l'orifice 18 est perforé pour le passage de la sonde 10.

En outre, les moyens d'isolation 16 comprennent une chemise d'isolation 16C. La chemise 16C entoure la portion centrale 12C de l'embase 12 et présente une épaisseur correspondant sensiblement à la différence entre les rayons respectifs des portions centrale 12C et d'extrémité 12E de l'embase 12. En d'autres termes, l'embase 12 munie de la chemise 16C est sensiblement inscrite dans un cylindre de diamètre correspondant au diamètre des portions d'extrémité 12E. La chemise 16C est adaptée pour découpler thermiquement l'embase 12 de la gaine de protection 14.

Les blocs 16B et la chemise 16 sont réalisées à partir d'un matériau de faible conductivité thermique. Par exemple, ils sont réalisés à partir de magnésie.

La gaine de protection 14 est adaptée pour encapsuler l'embase 12 et les moyens d'isolation 16 et protéger ces éléments de l'environnement extérieur. En particulier, la gaine de protection 14 est configurée pour protéger mécaniquement l'embase 12, notamment d'éventuelles déformations de la structure de réception 4, et prévenir l'introduction de poussière et d'humidité dans l'embase 12. La gaine de protection 14 rend possible la mise en place du dispositif 2 de manière durable voire de manière définitive dans la structure 4.

La gaine de protection 14 est par exemple réalisée à partir d'acier inoxydable.

La gaine de protection 14 se présente sous la forme d'une couche de matière de forme complémentaire de la forme de l'ensemble comprenant l'embase 12 et les moyens d'isolation 16. La gaine 14 enveloppe l'embase 12 et les moyens d'isolation 16.

A noter que la gaine 14 présente une ouverture 14O pour le passage de moyens de raccord 15 de la sonde 10 à l'embase 12. Ces moyens de raccord 15 présente un col 15C fixé au bloc 16B recevant la sonde 10 et coopérant de manière étanche avec la gaine 14, et un bouchon 15B coopérant de manière étanche avec le col 15C. Le bouchon 15B est pourvu d'un passage central recevant la sonde 10.

A noter en outre que la gaine de protection 14 et l'embase 12 sont conçues, notamment du fait des matériaux dont elles sont constituées, pour favoriser plus avant la connexion thermique entre la sonde 10 et la structure 4, ce qui favorise la réalisation de mesures de température de la structure 4 par la sonde 10 et améliore la réponse thermique du dispositif 2 vis-à-vis de la structure 4.

En référence à la Figure 1, le dispositif de transfert d'énergie thermique 8 est adapté pour induire un changement d'état des premier, deuxième et troisième matériaux 26, 28, 30 par refroidissement ou chauffage de la cellule 6.

Le dispositif de transfert d'énergie thermique 8 comprend un module de chauffage 44, un module de refroidissement 46, et un échangeur thermique 48. En outre, le dispositif 8 comprend des moyens d'interface 49 pour la connexion du dispositif 8 à la cellule 6 et un système de fourniture d'énergie électrique 50.

Le module de chauffage 44 est configuré pour fournir de la chaleur à la cellule 6 et provoquer le passage des matériaux 26, 28, 30 depuis leur état solide vers leur état liquide. Le module de chauffage 44 comprend un fil résistif 44F enroulé autour de la cellule 6.

Le fil résistif 44F est par exemple réalisé à partir d'un alliage Nickel-Chrome agencé dans une gaine en inox. En outre, le fil 44F présente par exemple un diamètre de 0,25 mm.

Préférentiellement, le pas de l'enroulement formé par le fil 44F est variable le long de l'axe de la cellule 6. Plus précisément, le pas de l'enroulement autour de la cellule 6 sur la portion centrale de la cellule 6 correspondant à l'embase 12 est plus fort, c'est-à-dire plus grand, que le pas de l'enroulement autour des extrémités de la cellule 6. Ces extrémités présentant un pas différent correspondent par exemple à tout ou partie des blocs 16B. Plus spécifiquement, le pas de l'enroulement au niveau de la portion centrale de la cellule vaut une première valeur correspondant sensiblement à un écartement entre deux tours successifs du fil 44F compris entre une et deux fois la valeur du diamètre du fil 44F. En outre, le pas de l'enroulement autour de la cellule 6 sur les portions d'extrémité de la cellule vaut une deuxième valeur. Cette valeur correspond par exemple à un pas jointif, c'est-à-dire que chaque tour de fil 44F sur cette portion est au contact des tours adjacents.

Cette configuration a pour effet d'améliorer l'homogénéité spatiale de la température au sein de la cellule 6.

Le module de refroidissement 46 est configuré pour refroidir la cellule 6 et provoquer le passage des matériaux 26, 28, 30 depuis leur état liquide vers leur état solide. Le module de refroidissement 46 est agencé sous la cellule 6.

Le module de refroidissement 46 comprend au moins un module à effet Peltier. De manière connue, lors de son fonctionnement, un tel module présente une face chaude et une face froide. Le module de refroidissement 46 est orienté de sorte que sa face froide soit orientée vers la cellule 6 et abaisse ainsi la température au sein de la cellule 6, et en particulier de l'embase 12. Sa face chaude est alors orientée vers l'échangeur thermique 48. A noter que dans l'exemple de la Figure 1, le module de refroidissement comprend une pluralité de modules à effet Peltier 46A, 46B ainsi disposés.

L'échangeur thermique 48 est prévu pour dissiper la chaleur générée par le module de refroidissement 46 lors de son fonctionnement et ainsi prévenir la communication de cette chaleur à la cellule 6. L'échangeur thermique 48 est agencé au contact de la face chaude du module de refroidissement 46.

L'échangeur thermique 48 comprend un élément métallique 48M se présentant sous la forme d'une barre. Cette barre est par exemple rectiligne. Cet élément métallique 48M est au contact du module de refroidissement 46 et est au contact de la structure 4.

Les moyens d'interface 49 sont adaptés pour la connexion mécanique du dispositif de transfert 8 à la cellule 6 et pour la connexion thermique du module de refroidissement 46 à la cellule 6.

Les moyens d'interface 49 comprennent une pièce de connexion 49P agencée au contact du fil résistif 44F d'une part et au module de refroidissement 46 d'autre part. Cette pièce 49P permet les échanges thermiques par conduction entre le module de refroidissement 46 et la cellule 6.

En outre, les moyens d'interface 49 comprennent des vis de fixation 49V fixant l'élément métallique 48M, le module de refroidissement 46 et la pièce de connexion 49P entre eux au contact de la cellule 6.

Le système de fourniture d'énergie électrique 50 est configuré pour fournir de l'énergie électrique au module de chauffage 44 et au module de refroidissement 46 pour générer un transfert d'énergie thermique avec la cellule 6. En particulier, le système 50 est configuré pour alimenter le module de chauffage 44 et le module de refroidissement de façon à générer des rampes de température.

Le système de fourniture d'énergie électrique 50 comprend une alimentation 52, un module de commande 54 configuré pour commander l'alimentation 52 afin de générer les transferts d'énergie thermique et en particulier les rampes de température, ainsi qu'une source d'alimentation 55 en énergie électrique. Alternativement ou parallèlement, le système 50 est connecté à une source d'alimentation externe, telle qu'un réseau d'alimentation (connexion en pointillés sur la Figure 1).

La sonde 10 est configurée pour réaliser des mesures locales de température, par opposition à des mesures réparties de température. Plus particulièrement, la sonde 10 est configurée pour réaliser des mesures de température de la structure de réception 4 à laquelle elle est connectée thermiquement à travers l'embase 12 et la gaine de protection 14.

En pratique, la sonde 10 délivre un signal représentatif de la température, ce signal étant transformé en mesure effective de température par le dispositif d'acquisition 11.

La sonde 10 présente une portion principale sensible 56 pourvue d'une gaine de protection 58. La portion principale sensible 56 est engagée dans l'orifice 18 de l'embase 12. Dans l'exemple de la Figure 1, la portion sensible 56 correspond sensiblement à la moitié de partie de la sonde 10 engagée dans l'embase, et plus particulièrement de la moitié gauche de cette partie. La sonde 10 comprend en outre un câble de connexion 60 connecté au module d'acquisition 11.

La sonde 10 est par exemple une sonde de type Pt100, c'est-à-dire une sonde dont la portion principale sensible 56 est réalisée à partir de platine et qui présente une précision de l'ordre du 100^{e} de degré. La résistance électrique de la sonde vaut alors sensiblement 100 ohms à 0 °C. La sonde 10 est par exemple une sonde Pt100 de classe A, cette classe quantifiant la tolérance de la sonde. En outre, par exemple, la sonde 10 présente un diamètre d'environ 3 mm, ou encore un diamètre compris entre 3 et 6 mm.

Alternativement, la sonde 10 est un thermocouple ou une thermistance. Dans ces cas de figures, la sonde 10 présente une forme analogue à celle décrite précédemment. Toutefois, le diamètre de la sonde est alors compris entre 1 et 6 mm et les dimensions de la cellule 6 en sont légèrement modifiées en proportion.

Le module d'acquisition 11 est configuré pour transformer les signaux délivrés par la sonde 10 en mesures de température, enregistrer ces mesures et en permettre la récupération en vue de la vérification métrologique de la sonde et/ou de la correction de mesures effectuées par la sonde 10. Le module d'acquisition 11 présente une fréquence d'acquisition configurable. Cette fréquence est par exemple inférieure ou égale à 2 Hz.

A cet effet, le module d'acquisition 11 comprend une unité de traitement 62 configurée pour transformer les signaux fournis par la sonde 10 en mesures de température, une mémoire 64 dans laquelle sont enregistrées les mesures de température et une interface de communication 66 pour la récupération de ces mesures.

La récupération des mesures via l'interface de communication 66 est par exemple effectuée par accès physique au dispositif d'acquisition 11, ou encore par émission à destination d'un équipement distant via un réseau auquel l'interface de communication 66 est connectée.

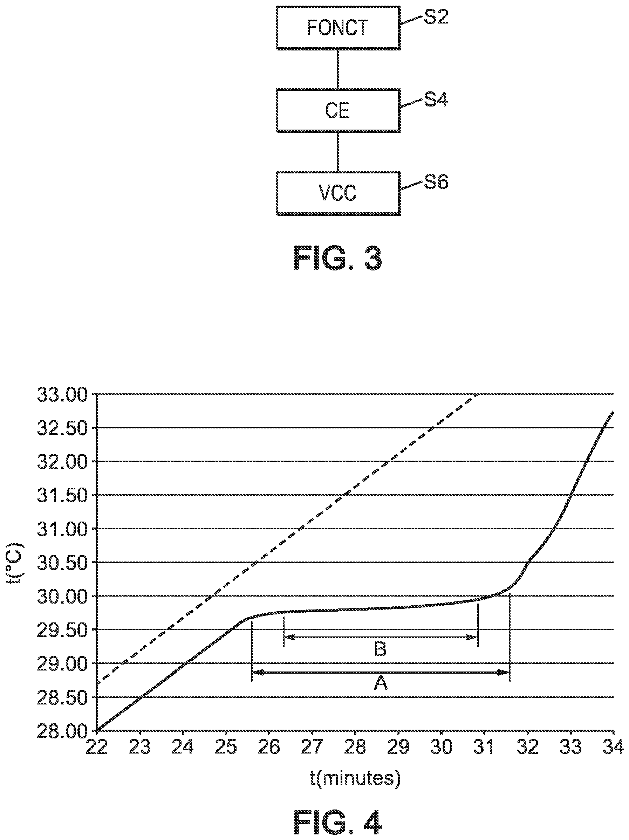

Un procédé d'utilisation du dispositif 2 va maintenant être décrit en référence à la Figure 3.

Lors d'une étape de fonctionnement S2, le dispositif 2 mesure la température de la structure de réception 4. Pour ce faire, l'embase 12 échange de l'énergie thermique avec la structure 4 au travers de la gaine de protection 14, des moyens d'isolation 16 et de l'embase 12, et ce jusqu'à arriver à un équilibre thermique dans lequel la température de l'embase 12 correspond sensiblement à la température de la structure 4. La sonde 10 mesure alors la température de la structure 4. La partie sensible 56 de la sonde 10 envoie alors au module d'acquisition 11 un signal représentatif de la température de la structure 4 telle que mesurée par la sonde 10. Le dispositif de transfert d'énergie thermique 8 est alors inactif. Lors de cette étape, l'acquisition est par exemple réalisée à raison d'une mesure par heure ou moins, telle que par exemple une mesure par jour.

Lors d'une étape de test S4, on réalise un échange d'énergie thermique entre la cellule 6 et le dispositif de transfert d'énergie thermique 8, et on effectue des mesures de température via la sonde 10.

Plus précisément, on entraîne un changement d'état du premier, du deuxième et du troisième matériau 26, 28, 30 en utilisant le dispositif de transfert d'énergie thermique 8. A cet effet, on commande le dispositif de transfert d'énergie thermique 8 pour l'application d'au moins une rampe de température correspondant à une plage de température comprenant les températures de changement d'état fixes T1, T2 et T3. Parallèlement, lors de cet échange thermique, on enregistre les mesures fournies par la sonde 10 dans le dispositif d'acquisition 11. Ces mesures enregistrées contiennent des mesures de température effectuées lors des changements d'état respectifs des trois matériaux 26, 28, 30. A noter que lors de cette étape, l'acquisition des mesures est réalisée avec une fréquence sensiblement égale à 2 Hz.

La Figure 4 illustre une portion d'une rampe de température (courbe haute) mise en oeuvre lors de l'étape de test S4. La Figure 4 illustre plus précisément une plage de température dans laquelle la température de changement d'état fixe T2 du deuxième matériau se trouve. A noter que cette courbe haute correspond à la température qui serait mesurée dans le voisinage du dispositif de transfert d'énergie thermique 8 en l'absence de la cellule 6. Cette Figure 4 illustre également la portion correspondante de la courbe des températures mesurées par la sonde 10 (courbe basse) pour cette partie de la rampe de température.

Comme illustré sur cette Figure, le changement d'état de l'un des matériaux 26, 28, 30 provoque un palier de température visualisable sur la courbe des mesures obtenues via la sonde 10. Ce palier de température survient précisément lorsque la température de la cellule 6 atteint la température de changement d'état fixe du matériau concerné, qui est le matériau 28 dans l'exemple de la Figure 4. Ceci s'explique par le fait que le changement d'état se produit à température sensiblement fixe sous l'effet du transfert d'énergie thermique imprimé par le dispositif de transfert d'énergie thermique 8.

A noter que la Figure 4 illustre une portion d'une rampe de température croissante, c'est-à-dire qu'on réalise un chauffage de la cellule 6 de façon à provoquer le ou les changements d'état souhaités.

Toutefois, il est également envisageable de préalablement, postérieurement ou alternativement refroidir la cellule 6, ce qui est également adapté pour provoquer un changement d'état des matériaux 26, 28, 30 (en l'occurrence un passage à l'état solide). Par exemple, lors de cette étape, on réalise séquentiellement un chauffage et un refroidissement dans un ordre quelconque, cette séquence étant ou non répétée.

En outre, dans certains modes de réalisation, au commencement de cette étape de test S4, on réalise un échange thermique entre la cellule et le dispositif de transfert d'énergie thermique 8 de façon à ramener la cellule 6 à une température par défaut. Cette température par défaut est par exemple choisie inférieure à la température de changement d'état fixe la plus faible des trois températures (ici, la température T1), ou bien supérieure à la température la plus haute (ici T3). Ceci permet de s'assurer que le chauffage, respectivement le refroidissement de la cellule 6 provoquera un changement d'état de chacun des matériaux 26, 28, 30.

Suite à cette étape S4, lors d'une étape de traitement S6, on effectue une vérification métrologique de la sonde 10 et/ou une correction de mesure de la sonde 10 à partir d'une part d'une ou plusieurs des températures de changement d'état fixes des matériaux 26, 28, 30, et d'autre part des températures mesurées par la sonde 10 lors de l'étape de test S4.

Pour la vérification métrologique de la sonde 10, on compare la température de changement d'état fixe de l'un des matériaux 26, 28, 30, et qui est connue en soi, à la température de changement d'état déterminée à partir des mesures effectuées par la sonde 10, et qui correspond à la température à laquelle s'est formé le pallier de température associé.

Par exemple, en référence à la Figure 4, la température de changement d'état est déterminée à partir des mesures effectuées par la sonde 10 comme suit.

Lors d'un premier traitement, on calcule la dérivée des mesures effectuées par la sonde 10 en chaque point de la courbe. Cette dérivée est par exemple en °C/min. A partir de ces dérivées, on détermine la durée du changement d'état du matériau 26, 28, 30 considéré en isolant l'instant auquel la dérivée chute brutalement (début du changement d'état) et l'instant auquel la dérivée augmente brutalement (fin de changement d'état). La plage A sur la Figure 4 correspond aux instants compris entre l'instant de début et l'instant de fin du changement d'état ainsi déterminés. La différence entre ces deux instants fournit la durée du changement d'état. On détermine ensuite la température du changement d'état fournie par la sonde en tant que température moyenne mesurée par la sonde au cours du changement d'état.

Dans certains modes de réalisation, pour la détermination de cette température de changement d'état, on ne conserve que les valeurs de température de la plage A qui présentent une dérivée valant sensiblement toutes une même valeur minimale, ou alors sont inférieures à une valeur prédéterminée. Ces valeurs correspondent aux températures de la plage B. L'existence de différentes valeurs de dérivées de la température lors du changement d'état s'explique par le fait que, lors du début et de la fin du changement d'état, des phénomènes transitoires se produisent. Ces phénomènes se manifestent par une variation temporaire de la valeur de la dérivée de la température avant que celle-ci ne se stabilise autour d'une valeur minimale. Cette variante permet d'obtenir une température de changement d'état telle que mesurée plus fine que précédemment dans la mesure où ces phénomènes transitoires sont alors écartés des mesures utilisées.

L'écart constaté entre la température de changement d'état déterminée à partir des mesures de la sonde 10 et la température de changement d'état fixe connue en soi fournit la dérive de la sonde 10.

Pour la correction de mesure de la sonde 10, on effectue cette comparaison entre la température de changement d'état fixe en tant que telle à la température de changement d'état déterminée à partir des mesures de la sonde 10 pour deux matériaux distincts, par exemple pour les premier et deuxième matériaux 26, 28, ou encore pour les deuxième et troisième matériaux 28, 30. Les écarts constatés entre les températures de changement d'état fixes connues en elles-mêmes et les températures de changement d'état mesurées permettent de corriger les mesures fournies par la sonde 10.

En pratique, pour la correction d'une mesure, on considère que la dérive de la sonde est linéaire. Pour obtenir une température corrigée, on additionne un terme correctif déterminé à partir de la variation de la dérive fournie par les températures de changement d'état mesurées à la température relevée par la sonde.

Le dispositif 2 selon l'invention a été mis en oeuvre pour différentes températures de structure 4 (prises sensiblement constantes dans le temps), notamment 15 °C, 20 °C, 25 °C, 30 °C et 35 °C, et ce pour une sonde 10 présentant une dérive négligeable.

Les résultats obtenus sont résumés dans le tableau suivant. A noter que les températures « T changement état Ga-Bi » et « T changement état Bi-In » sont les températures déterminées à partir des mesures réalisées pendant les changements d'état des deuxième et troisième matériaux 28, 30 comme décrit ci-dessus. En outre, dans les cas dans lesquels la température de la structure 4 est supérieure à la température de changement d'état Ga-Bi, la cellule a été initialement refroidie par le module de refroidissement 46 à une température de 15 °C.

En outre, la rampe de chauffage appliquée était de 0,5 °C/min entre 15 °C et 80 °C.

| Temp structure | T changement état Ga-Bi | T changement état Bi-In |
|---|---|---|
| 15 °C | 29,90 °C | 72,88 °C |
| 20 °C | 29,85 °C | 72,90 °C |
| 25 °C | 30,10 °C | 72,86 °C |
| 30°C | 29,92 °C | 72,91 °C |
| 35 °C | 29,99 °C | 72, 65 °C |

D'autres modes de réalisation sont envisageables. En particulier, la description ci-dessus a été donnée dans le cas d'un dispositif 2 comprenant trois matériaux 26, 28, 30 différents dont on provoque le changement d'état.

Toutefois, dans certains modes de réalisation, le dispositif 2 ne comprend que deux matériaux, par exemple les premiers et deuxième matériaux 26, 28, ou encore les deuxième et troisième matériaux. Le dispositif 2 permet également la vérification métrologique de la sonde 10 ainsi que la correction des mesures fournies par la sonde 10.

En outre, en variante, le dispositif 2 ne comprend qu'un unique point fixe, par exemple le matériau 26. Le dispositif 2 ne permet alors que de réaliser la vérification métrologique de la sonde 10.

En outre, dans certains modes de réalisation, le dispositif 2 comprend plus de trois matériaux 26, 28, 30.

Par ailleurs, dans certains modes de réalisation pour lesquels le refroidissement de la cellule n'est pas nécessaire, le dispositif 8 comprend uniquement le dispositif de chauffage 44. Ce mode de réalisation est avantageux dans des conditions d'utilisation dans lesquelles la structure 4 présente une température suffisamment faible pour amener à elle seule au moins un, voire deux, voire trois des matériaux 26, 28, 30 dans un état solide lorsque les moyens de chauffage ne sont pas activés.

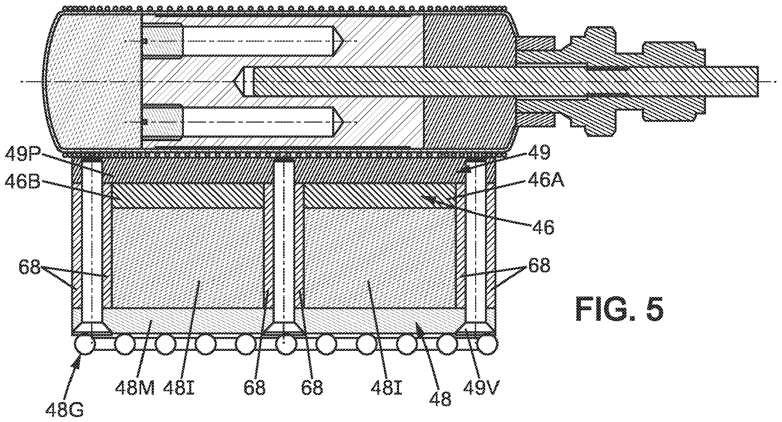

En outre, en référence à la Figure 5, en variante, l'échangeur thermique comprend également ou alternativement une grille métallique 48G. Cette grille est par exemple un maillage réalisé à partir de fils de cuivre. Ces fils présentent par exemple un diamètre de 4mm. La grille 48G est utilisée en remplacement de la pièce métallique 48M, ou encore en adjonction de la pièce métallique 48M. A noter que dans le cas où le dispositif 2 comprend à la fois la pièce métallique 48M et la grille 48G, les dimensions de la pièce métallique, et en particulier sa longueur, peuvent être réduites. Ceci facilite l'intégration du dispositif 2 à la structure 4.

A noter que les dimensions de la grille 48G sont prédéterminées en fonction de la nature de la structure 4 et/ou de la plage de températures au sein de laquelle la température de la structure 4 évolue.

En variante encore, également en référence à la Figure 5, l'échangeur thermique 48 comprend également une ou plusieurs pièces intermédiaires 48I (Figure 5) agencées entre le module de refroidissement 46 et l'élément métallique 48M. Ces pièces permettent d'augmenter la distance séparant l'échangeur de l'élément métallique 48M de la cellule 6 et de réduire plus avant le couplage thermique entre le module de refroidissement 46 et la cellule 6.

Ces pièces sont réalisées à partir d'un matériau présentant une faible conductivité thermique, tel que par exemple de la magnésie, par exemple sous forme de poudre ou encore sous forme de bloc usiné.

En variante, toujours en référence à la Figure 5, le dispositif 2 comprend également un matériau isolant 68 agencé dans les interstices de l'échangeur thermique 48 et des moyens d'interface 49. En particulier, le matériau isolant 68 est agencé au contact des vis de fixation 49V et les isole de la structure 4, du module de refroidissement 46 et des pièces intermédiaires 48I. Ce matériau isolant 68 comprend par exemple un polymère isolant de type PVC ou polyamide ou un isolant minéral de type mica.

A noter que la Figure 5 illustre un mode de réalisation dans lequel ces trois dernières variantes sont combinées. Toutefois, ces variantes peuvent être mises en oeuvre indépendamment les unes des autres.

A noter qu'un avantage particulièrement intéressant du dispositif 2 selon l'invention est d'autoriser une connexion thermique entre la sonde 10 et la structure 4 suffisamment bonne pour que la sonde 10 puisse mesurer la température de la structure 4 avec une bonne réponse thermique, tout en n'empêchant pas l'application de rampes de températures effectivement vues par la sonde 10 au sein de la cellule 6 pour la mesure des températures auxquelles s'opèrent les changements d'état des matériaux à point fixe. Comme décrit précédemment, ceci résulte des considérations de dimensions de la cellule, en particulier vis-à-vis des dimensions de la sonde 10, des matériaux des éléments de la cellule 6 et de la présence des moyens d'isolation 16.

## Revendications

1. Dispositif de mesure locale de température adapté pour réaliser des mesures de température d'un voisinage immédiat du dispositif, le dispositif comprenant :
- une cellule (6) comprenant une embase (12), présentant une forme générale cylindrique, conductrice thermiquement et au moins un premier matériau (26, 28, 30) présentant une température de changement d'état fixe (T1, T2, T3) prédéterminée et agencé dans l'embase (12),
- un dispositif de transfert d'énergie thermique (8) connecté thermiquement à l'embase (12) et à l'au moins un premier matériau (26, 28, 30),
- une sonde de mesure locale de température (10) reçue dans l'embase (12) et en contact thermique avec l'au moins un premier matériau (26, 28 30),
le dispositif de transfert d'énergie thermique (8) étant adapté pour entraîner un changement d'état du premier matériau (26, 28, 30) pour réaliser au moins une vérification métrologique de la sonde de mesure locale de température (10),
le dispositif de mesure locale de température étant **caractérisé en ce qu'**il comprend en outre des moyens d'isolation thermique (16) configurés pour homogénéiser la température au sein de la cellule (6), lesdits moyens d'isolation thermique (16) comprenant au moins un bloc (16B) en appui contre l'une de faces d'extrémité de l'embase (12).

2. Dispositif selon la revendication 1, **caractérisé en ce que** la cellule (6) comprend une gaine de protection (14) encapsulant l'embase (12), de sorte que le dispositif de mesure locale de température (2) est adapté pour être reçu de manière durable dans une structure de réception (4) et être inaccessible au sein de ladite structure de réception (4).

3. Dispositif selon la revendication 1 ou la revendication 2, **caractérisé en ce que** la cellule (6) connecte thermiquement la sonde de mesure locale de température audit voisinage immédiat de sorte que la cellule (6) autorise la réalisation de mesures de température représentatives de la température dudit voisinage immédiat par la sonde de mesure locale de température (10) reçue dans l'embase (12).

4. Dispositif selon l'une quelconque des revendications précédentes, **caractérisé en ce qu'**il est adapté pour permettre de réaliser ladite vérification métrologique de la sonde de mesure locale de température (10) à partir de températures mesurées par la sonde de mesure locale (10) de température lors du changement d'état dudit premier matériau (26) et de ladite température de changement d'état fixe prédéterminée (T1).

5. Dispositif selon la revendication 4, **caractérisé en ce qu'**il comprend au moins un premier et un deuxième matériaux (26, 28) agencés dans l'embase (12) et présentant au moins une première, respectivement une deuxième température de changement d'état fixes prédéterminées (T1, T2), le dispositif de transfert d'énergie thermique (8) étant adapté pour entraîner un changement d'état des premier et deuxième matériaux (26, 28), le dispositif de mesure locale de température (2) étant adapté pour permettre de réaliser une correction de mesures de température fournies par la sonde de mesure locale de température (10) à partir de températures mesurées par la sonde de mesure locale de température (10) lors des changements d'état respectifs des premier et deuxième matériaux et des première et deuxième températures de changement d'état (T1, T2) fixes prédéterminées.

6. Dispositif selon l'une quelconque des revendications précédentes, **caractérisé en ce qu'**il comprend un module de chauffage (44) comportant un fil résistif (44F) enroulé autour de la cellule (6).

7. Dispositif selon la revendication 6, **caractérisé en ce que** le fil résistif (44F) définit un enroulement présentant un pas variable le long d'un axe de la cellule (6).

8. Dispositif selon la revendication 6 ou 7, **caractérisé en ce que** l'enroulement présente un pas valant une première valeur sur une portion centrale de la cellule (6) et une deuxième valeur inférieure à la première valeur sur des portions d'extrémité de la cellule (6).

9. Dispositif selon l'une quelconque des revendications précédentes, **caractérisé en ce que** le dispositif de transfert d'énergie thermique (8) comprend un module de refroidissement (46) et un échangeur thermique (48) configuré pour évacuer de la chaleur générée par le module de refroidissement (46) lors du fonctionnement du module de refroidissement (46).

10. Dispositif selon l'une quelconque des revendications précédentes, **caractérisé en ce que** les moyens d'isolation (16) comprennent une chemise d'isolation (16C) entourant une portion centrale (12C) de l'embase (12).

11. Cellule pour dispositif de mesure locale de température selon l'une quelconque des revendications précédentes, la cellule (6) comprenant une embase (12), présentant une forme générale cylindrique, conductrice thermiquement, au moins un logement de réception (20, 22, 24) d'un premier matériau (26, 28, 30) présentant une température de changement d'état fixe (T1, T2, T3) prédéterminée, un orifice de réception (18) d'une sonde de mesure locale de température (10), la cellule étant **caractérisée en ce qu'**elle comprend en outre des moyens d'isolation thermique (16) configurés pour homogénéiser la température au sein de la cellule (6), lesdits moyens d'isolation thermique (16) comprenant au moins un bloc (16B) en appui contre l'une de faces d'extrémité de l'embase (12).

12. Cellule selon la revendication 11, **caractérisée en ce qu'**elle comprend une gaine de protection (14) encapsulant l'embase, de sorte que le dispositif de mesure locale de température (2) est adapté pour être reçu de manière durable dans une structure de réception (4) et être inaccessible au sein de ladite structure de réception.

13. Procédé d'utilisation d'un dispositif de mesure locale de température selon l'une quelconque des revendications 1-10, dans lequel :
∘ on entraîne un changement d'état du premier matériau (26, 28, 30) avec le dispositif de transfert d'énergie thermique (8),
∘ avec la sonde de mesure locale de température (10), on réalise des mesures de température lors dudit changement d'état,
∘ on détermine une température de changement d'état mesurée à partir des mesures de température mesurées lors dudit changement d'état, et
∘ on réalise une vérification métrologique de la sonde de mesure locale (10) ou une correction de mesure de température réalisée par la sonde de mesure locale (10) de température à partir d'au moins la température de changement d'état fixe prédéterminée (T1, T2, T3) et la température de changement d'état mesurée déterminée.

14. Procédé selon la revendication 13 pour l'utilisation d'un dispositif de mesure locale de température selon la revendication 5, dans lequel :
∘ on entraîne en outre un changement d'état du deuxième matériau (28) avec le dispositif de transfert d'énergie thermique (8),
∘ avec la sonde de mesure locale de température (10), on réalise en outre des mesures de température lors du changement d'état du deuxième matériau (28),
∘ on détermine une température de changement d'état mesurée pour le deuxième matériau à partir des températures mesurées pendant le changement d'état du deuxième matériau,
∘ on réalise une correction d'une mesure réalisée par la sonde de mesure locale de température à partir des températures de changement d'état fixes prédéterminées des premier et deuxième matériaux (26, 28, 30) et des températures de changement mesurées des premier et deuxième matériaux.

15. Procédé d'utilisation selon la revendication 13 ou 14, dans lequel, pour la détermination d'une température de changement d'état mesurée, on détermine la dérivée des températures mesurées par la sonde de mesure locale de température lors du changement d'état, on détermine des instants de début et de fin du changement d'état à partir de la dérivée des températures mesurées, et on détermine la température de changement d'état mesurée en tant que moyenne des températures mesurées par la sonde de mesure locale de température (10) entre les instants de début et de fin du changement d'état.

## Patentansprüche

1. Vorrichtung zur lokalen Temperaturmessung, ausgebildet zum Durchführen von Temperaturmessungen einer unmittelbaren Umgebung der Vorrichtung, wobei die Vorrichtung umfasst:
- eine einen wärmeleitenden, im Wesentlichen eine zylindrische Form und wenigstens ein eine vorgegebene feste Zustandswechseltemperatur (T1, T2, T3) aufweisendes und im Sockel (12) angeordnetes erstes Material (26, 28, 30) aufweisenden Sockel (12) umfassende Zelle (6),
- eine thermisch mit dem Sockel (12) und mit dem wenigstens einen ersten Material (26, 28, 30) verbundene Vorrichtung zum Übertragen von Wärmeenergie (8),
- eine im Sockel (12) aufgenommene und in thermischem Kontakt mit dem wenigstens einen ersten Material (26, 28, 30) befindliche Sonde zur lokalen Temperaturmessung (10),
wobei die Vorrichtung zum Übertragen von Wärmeenergie (8) zum Bewirken eines Zustandswechsels des ersten Materials (26, 28, 30, um wenigstens eine messtechnische Überprüfung der Sonde zur lokalen Temperaturmessung (10) auszuführen ausgebildet ist,
wobei die Vorrichtung zur lokalen Temperaturmessung **dadurch gekennzeichnet ist, dass** sie ferner zum Homogenisieren der Temperatur in der Zelle (6) ausgebildete Wärmeisolationsmittel (16) umfasst, wobei die Wärmeisolationsmittel (16) wenigstens einen Block (16B) im Anschlag an eine der Endflächen des Sockels (12) umfassen.

2. Vorrichtung nach Anspruch 1, **dadurch gekennzeichnet, dass** die Zelle (6) eine den Sockel (12) einkapselnde Schutzhülle (14) umfasst, so dass die Vorrichtung zur lokalen Temperaturmessung (2) zur dauerhaften Aufnahme in einer Aufnahmestruktur (4) und zur Unerreichbarkeit in der Aufnahmestruktur (4) ausgebildet ist.

3. Vorrichtung nach Anspruch 1 oder Anspruch 2, **dadurch gekennzeichnet, dass** die Zelle (6) die Sonde zur lokalen Temperaturmessung thermisch mit der unmittelbaren Umgebung verbindet, so dass die Zelle (6) das Durchführen von repräsentativen Temperaturmessungen der Temperatur der unmittelbaren Umgebung durch die im Sockel (12) aufgenommene Sonde zur lokalen Temperaturmessung (10) ermöglicht.

4. Vorrichtung nach einem der vorhergehenden Ansprüche, **dadurch gekennzeichnet, dass** sie zum Ermöglichen des Durchführens der messtechnischen Überprüfung der Sonde zur lokalen Temperaturmessung (10) anhand von von der Sonde zur lokalen Messung (10) der Temperatur beim Zustandswechsel des ersten Materials (26) gemessenen Temperaturen und der vorgegebenen festen Zustandswechseltemperatur (T1) ausgebildet ist.

5. Vorrichtung nach Anspruch 4, **dadurch gekennzeichnet, dass** sie wenigstens ein im Sockel (12) angeordnetes und wenigstens eine erste bzw. eine zweite vorgegebene feste Zustandswechseltemperatur (T1, T2) aufweisendes erstes und zweites Material (26, 28) umfasst, wobei die Vorrichtung zum Übertragen von Wärmeenergie (8) zum Bewirken eines Zustandswechsels von erstem und zweitem Material (26, 28) ausgebildet ist, wobei die Vorrichtung zur lokalen Temperaturmessung (2) zum Ermöglichen des Durchführens einer Korrektur von von der Sonde zur lokalen Temperaturmessung (10) gelieferten Temperaturmessungen aufgrund von von der Sonde zur lokalen Temperaturmessung (10) bei Zustandswechsel jeweils von erstem und zweiten Material gemessenen Temperaturen und vorgegebener fester erster und zweiter Zustandswechseltemperatur (T1, T2) ausgebildet ist.

6. Vorrichtung nach einem der vorhergehenden Ansprüche, **dadurch gekennzeichnet, dass** sie ein Heizmodul (44) umfassend einen um die Zelle (6) gewickelten Widerstandsdraht (44F) umfasst.

7. Vorrichtung nach Anspruch 6, **dadurch gekennzeichnet, dass** der Widerstandsdraht (44F) eine eine variable Teilung entlang einer Achse der Zelle (6) aufweisende Wicklung definiert.

8. Vorrichtung nach Anspruch 6 oder 7, **dadurch gekennzeichnet, dass** die Wicklung eine für einen ersten Wert in einem Mittelabschnitt der Zelle (6) und einen zweiten Wert unter dem ersten Wert in Endabschnitten der Zelle (6) geltende Teilung aufweist.

9. Vorrichtung nach einem der vorhergehenden Ansprüche, **dadurch gekennzeichnet, dass** die Vorrichtung zum Übertragen von Wärmeenergie (8) ein Kühlmodul (46) und einen zum Abführen der vom Kühlmodul (46) im Betrieb des Kühlmoduls (46) erzeugten Wärme ausgebildeten Wärmetauscher (48) umfasst.

10. Vorrichtung nach einem der vorhergehenden Ansprüche, **dadurch gekennzeichnet, dass** die Isoliermittel (16) eine einen Mittelteil (12C) des Sockels (12) umgebende Isolierhülle (16C) umfassen.

11. Zelle für eine Vorrichtung zur lokalen Temperaturmessung nach einem der vorhergehenden Ansprüche, wobei die Zelle (6) einen wärmeleitenden, eine im Wesentlichen zylindrische Form aufweisenden Sockel (12), mindestens eine Aufnahme (20, 22, 24) aus einem ersten Material (26, 28, 30), das eine vorgegebene feste Zustandswechseltemperatur (T1, T2, T3) aufweist, eine Aufnahmeöffnung (18) für eine Sonde zur lokalen Temperaturmessung (10) umfasst, wobei die Zelle **dadurch gekennzeichnet ist, dass** sie ferner zum Homogenisieren der Temperatur in der Zelle (6) ausgebildete Wärmeisolationsmittel (16) umfasst, wobei die Wärmeisolationsmittel (16) wenigstens einen Block (16B) im Anschlag an eine der Endflächen des Sockels (12) umfassen.

12. Zelle nach Anspruch 11, **dadurch gekennzeichnet, dass** sie eine den Sockel einkapselnde Schutzhülle (14) umfasst, so dass die Vorrichtung zur lokalen Temperaturmessung (2) zur dauerhaften Aufnahme in einer Aufnahmestruktur (4) und zur Unerreichbarkeit in der Aufnahmestruktur ausgebildet ist.

13. Verfahren zur Verwendung einer Vorrichtung zur lokalen Temperaturmessung nach einem der Ansprüche 1-10, wobei:
∘ ein Zustandswechsel des ersten Materials (26, 28, 30) mit der Vorrichtung zum Übertragen von Wärmeenergie (8) bewirkt wird,
∘ mit der Sonde zur lokalen Temperaturmessung (10) Temperaturmessungen beim Zustandswechsel bewirkt werden,
∘ eine gemessene Zustandswechseltemperatur aus den beim Zustandswechsel gemessenen Temperaturmaßen ermittelt wird, und
∘ eine messtechnische Überprüfung der Sonde zur lokalen Messung (10) oder eine Korrektur der durch die Sonde zur lokalen Messung (10) der Temperatur durchgeführten Temperaturmessung ausgehend von wenigstens der vorgegebenen festen Zustandswechseltemperatur (T1, T2, T3) und der ermittelten gemessenen Zustandswechseltemperatur durchgeführt wird.

14. Verfahren nach Anspruch 13 für die Verwendung einer Vorrichtung zur lokalen Temperaturmessung nach Anspruch 5, wobei:
∘ ferner ein Zustandswechsel des zweiten Materials (28) mit der Vorrichtung zum Übertragen von Wärmeenergie (8) bewirkt wird,
∘ mit der Sonde zur lokalen Temperaturmessung (10) ferner Temperaturmessungen beim Zustandswechsel des zweiten Materials (28) bewirkt werden,
∘ eine gemessene Zustandswechseltemperatur für das zweite Material aufgrund der während des Zustandswechsels des zweiten Materials gemessenen Temperaturen ermittelt wird,
∘ eine Korrektur einer von der Sonde zur lokalen Temperaturmessung durchgeführten Messung aufgrund der vorgegebenen festen Zustandswechseltemperaturen von erstem und zweitem Material (26, 28, 30) und gemessenen Wechseltemperaturen von erstem und zweitem Material durchgeführt wird.

15. Verfahren zur Nutzung nach Anspruch 13 oder 14, wobei zum Ermitteln einer gemessenen Zustandswechseltemperatur die Abweichung der von der Sonde zur lokalen Temperaturmessung gemessenen Temperaturen beim Zustandswechsel ermittelt wird, Zeitpunkte von Beginn und Ende des Zustandswechsels aufgrund der Abweichung der gemessenen Temperaturen ermittelt werden, und die gemessene Zustandswechseltemperatur als Durchschnitt der von der Sonde zur lokalen Temperaturmessung (10) gemessenen Temperaturen zwischen den Zeitpunkten von Beginn und Ende des Zustandswechsels ermittelt wird.

## Claims

1. A device for local temperature measurement that is suitable for obtaining temperature measurements of the immediate vicinity of the device, the device comprising:
- a cell (6) comprising a thermally conductive base (12), having a general shape of a cylinder, and at least a first material (26, 28, 30) having a predetermined fixed state-change temperature (T1, T2, T3) and arranged in the base (12),
- a thermal energy transfer device (8) thermally connected to the base (12) and to the at least first material (26, 28, 30),
- a local temperature measurement probe (10) received in the base (12) and in thermal contact with the at least first material (26, 28 30),
the thermal energy transfer device (8) being adapted to cause a change of state of the first material (26, 28, 30) in order to carry out at least one metrological verification of the local temperature measurement probe (10)
the device for local temperature measurement being **characterized in that** it further comprises thermal insulating means (16) configured for maintaining a uniform temperature within the cell (6), said thermal insulating means (16) comprising at least one block (16B) bearing against one of the end faces of the base (12).

2. Device according to claim 1, wherein the cell (6) comprises a protective sheath (14) encapsulating the base (12), so that the device for local temperature measurement (2) is adapted to be received in a lasting manner in a receiving structure (4) and to be inaccessible within said receiving structure (4).

3. Device according to claim 1 or claim 2, wherein the cell (6) thermally connects the local temperature measurement probe to said immediate vicinity so that the cell (6) enables the obtaining of temperature measurements representative of the temperature of said immediate vicinity, by the local temperature measurement probe (10) received in the base (12).

4. Device according to any one of the preceding claims, wherein it is adapted to enable metrological verification of the local temperature measurement probe (10) based on temperatures measured by the local temperature measurement probe (10) during the change of state of said first material (26) and on said predetermined fixed state-change temperature (T1).

5. Device according to claim 4, wherein it comprises at least first and second materials (26, 28) arranged in the base (12) and having at least a first, respectively a second predetermined fixed state-change temperature (T1, T2), the thermal energy transfer device (8) being adapted to cause a change of state of the first and second materials (26, 28), the device for local temperature measurement (2) being adapted to allow correcting temperature measurements provided by the local temperature measurement probe (10) based on temperatures measured by the local temperature measurement probe (10) during respective state changes of the first and second materials and on the first and second predetermined fixed state-change temperatures (T1, T2).

6. Device according to any one of the preceding claims, wherein it comprises a heating module (44) comprising a resistive wire (44F) wound around the cell (6).

7. Device according to claim 6, wherein the resistive wire (44F) defines a winding having a variable pitch along an axis of the cell (6).

8. Device according to claim 6 or 7, wherein the winding has a pitch equal to a first value over a central portion of the cell (6) and a second value, less than the first value, over end portions of the cell (6).

9. Device according to any one of the preceding claims, wherein the thermal energy transfer device (8) comprises a cooling module (46) and a heat exchanger (48) configured to remove heat generated by the cooling module (46) during operation of the cooling module (46).

10. Device according to any one of the preceding claims, wherein the insulating means (16) comprise an insulating jacket (16C) surrounding a central portion (12C) of the base (12).

11. Cell for a device for local temperature measurement according to any one of the preceding claims, the cell (6) comprising a thermally conductive base (12), having a general shape of a cylinder, at least one housing (20, 22, 24) for receiving a first material (26, 28, 30) having a predetermined fixed state-change temperature (T1, T2, T3), and a hole (18) for receiving a local temperature measurement probe (10), the cell being **characterized in that** it further comprises thermal insulating means (16) configured for maintaining a uniform temperature within the cell (6), said thermal insulating means (16) comprising at least one block (16B) bearing against one of the end faces of the base (12).

12. Cell according to claim 11, wherein it comprises a protective sheath (14) encapsulating the base, such that the device for local temperature measurement (2) is adapted to be received in a lasting manner in a receiving structure (4) and to be inaccessible within said receiving structure.

13. Method for using a device for local temperature measurement according to any one of the preceding claims 1-10, wherein:
∘ a change of state of the first material (26, 28, 30) is caused by the thermal energy transfer device (8),
∘ temperature measurements are carried out during said change of state, using the local temperature measurement probe (10),
∘ a measured state-change temperature is determined based on temperature measurements measured during said change of state, and
∘ a metrological verification of the local measurement probe (10) or a correction of a temperature measurement obtained by the local temperature measurement probe (10) is carried out based on at least the predetermined fixed state-change temperature (T1, T2, T3) and the determined measured state-change temperature.

14. Method according to claim 13 for using a device for local temperature measurement according to claim 5, wherein:
∘ a change of state of the second material (28) is also caused by the thermal energy transfer device (8),
∘ temperature measurements are also carried out during the change of state of the second material (28), using the local temperature measurement probe (10),
∘ a measured state-change temperature is determined for the second material, based on temperatures measured during the change of state of the second material,
∘ a correction of a measurement obtained by the local temperature measurement probe is carried out based on predetermined fixed state-change temperatures of the first and second materials (26, 28, 30) and the measured change temperatures of the first and second materials.

15. Method for using a device according to claim 13 or 14, wherein, for the determination of a measured state-change temperature, the derivative of the temperatures measured by the local temperature measurement probe during the change of state is determined, start and end times of the change of state are determined from the derivative of the temperatures measured, and the measured state-change temperature is determined as the average of the temperatures measured by the local temperature measurement probe (10) between the start and end times of the change of state.
